# EUROPÄISCHE PATENTSCHRIFT

(11) **EP 3 914 463 B1**
(45) Veröffentlichungstag und Bekanntmachung des Hinweises auf die Patenterteilung: **14.06.2023**
(21) Anmeldenummer: 20707604.3
(22) Anmeldetag: 26.02.2020
(51) Int. Cl.: B60G 11/26, B60G 17/04, B60G 17/08, B60G 99/00, B62D 33/06

(54) **FEDER-DÄMPFER-SYSTEM**
SPRING-DAMPER SYSTEM
SYSTÈME D'AMORTISSEUR À RESSORT

(30) Priorität: 15.03.2019 DE 102019001855
(43) Veröffentlichungstag der Anmeldung: 01.12.2021
(73) Patentinhaber: Hydac Mobilhydraulik GmbH, Sulzbach/Saar (DE)
(72) Erfinder: STREIT, Alexander, 66663 Merzig (DE)
(74) Vertreter: Bartels und Partner, Patentanwälte
(86) Internationale Anmeldenummer: PCT/EP2020/054997
(87) Internationale Veröffentlichungsnummer: WO 2020/187539

(56) Entgegenhaltungen:
- EP-A1- 3 216 633
- EP-A2- 2 952 419
- EP-A2- 2 952 419
- WO-A1-2016/124933
- DE-A1-102016 225 626
- DE-A1-102017 212 155

## Beschreibung

Die Erfindung betrifft ein Feder-Dämpfer-System zur gesteuerten Energiezufuhr zu einer Ring- und/oder einer Kolbenseite eines Differentialzylinders, mit den Merkmalen im Oberbegriff von Anspruch 1.

Systeme dieser Art sind Stand der Technik, vgl. EP 2 952 419 A2. Derartige Systeme mit doppelt wirkenden Federungszylindern kommen bevorzugt bei Kabinenfederungen von Fahrzeugen zum Einsatz, die für einen Betrieb auf rauem unbefestigtem Untergrund geeignet sind, wie es bei landwirtschaftlichen oder forstwirtschaftlichen Fahrzeugen, Baumaschinen oder anderen Sonderfahrzeugen der Fall ist. Um das Kabinenpersonal gegen im Betrieb auftretende Stoßbelastungen zu schützen, sind Kabinen solcher Fahrzeuge üblicherweise über doppelt wirkende Federungszylinder gegenüber dem Fahrgestell abgestützt. Bei dem erwähnten bekannten System ist der jeweilige Federungszylinder in Form eines Differentialzylinders mit dem Hydraulikspeicher über ein proportionales 4/2-Wegeventil verbunden, das entsprechend seiner Ansteuerung eine veränderliche Drosselstelle bildet. Durch die Anbindung des Dämpfungsventils an die bei den betreffenden Fahrzeugen vorhandene Fahrzeugsteuerung, die signalerzeugende Komponenten, wie Beschleunigungssensor und Winkelsensor, enthält, lässt sich dadurch die Dämpfungskraft in Anpassung an die jeweiligen Betriebsbedingungen einstellen, um eine verringerte Schwingungsbelastung der Kabine zu erreichen.

Die DE 10 2016 225 626 A1 offenbart ein Feder-Dämpfer-System zur gesteuerten Energiezufuhr zu einer Ring- und/oder einer Kolbenseite eines Differentialzylinders, bestehend aus mindestens dem Differentialzylinder, einem hydraulischen Speicher und einer Steuerventileinrichtung, wobei mittels mindestens einer Motor-Pumpen-Einheit in einem geschlossenen Kreis unter Einsatz der Steuerventileinrichtung die Ringseite oder sowohl die Ring- als auch die Kolbenseite des Differentialzylinders mit Druckfluid versorgbar sind.

Die DE 10 2017 212 155 A1 und die WO 2016/124933 A1 beschreiben weitere Feder-Dämpfer-Systeme.

Ausgehend von diesem Stand der Technik stellt sich die Erfindung die Aufgabe, ein Feder-Dämpfer-System zur Verfügung zu stellen, das bei Beibehalten der im Stand der Technik erreichten Vorteile sich durch ein demgegenüber weiter verbessertes Betriebsverhalten auszeichnet.

Erfindungsgemäß ist diese Aufgabe durch ein Feder-Dämpfer-System gelöst, das die Merkmale des Patentanspruchs 1 in seiner Gesamtheit aufweist.

Gemäß dem kennzeichnenden Teil des Patentanspruchs 1 ist vorgesehen, dass die Steuerventileinrichtung zwei Steuerventile aufweist, von denen ein Steuerventil an seinem Eingang mit der Ringseite und an seinem Ausgang sowohl mit der Kolbenseite als auch mit dem Eingang des zweiten Steuerventils fluidführend verbunden ist, das mit seinem Ausgang an den Eingang der Pumpe der Motor-Pumpen-Einheit angeschlossen ist, und dass die beiden Steuerventile Proportionaldrosselventile sind, die in ihrer nicht drosselnden Ausgangsstellung geöffnet sind.

Ferner ist vorgesehen, dass mittels mindestens einer Motor-Pumpen-Einheit in einem geschlossenen Kreis unter Einsatz der Steuerventileinrichtung die Ringseite oder sowohl die Ring- als auch die Kolbenseite des Differentialzylinders mit Druckfluid versorgbar sind.

Während das bekannte System als passives System insoweit adaptiv ist, als die Stärke der Dämpfung einstellbar ist, durch den Differentialzylinder jedoch keine aktiven Kräfte erzeugbar sind, ist das erfindungsgemäße System, durch die Möglichkeit einer von der Steuerventileinrichtung veranlassten Energiezufuhr mittels der Motor-Pumpen-Einheit als aktives Federungssystem realisierbar. Durch die gesteuerte Energiezufuhr zur Ring- und/oder Kolbenseite des Differentialzylinders lassen sich die Kräfte sowohl in Einfeder- als auch in Ausfederrichtung, anders als bei dem bekannten System, beeinflussen. In Anpassung an die Gegebenheiten des Fahrbetriebs ist dadurch nach Maßgabe der von der Fahrzeugsensorik gelieferten Daten ein optimales Schwingungsverhalten der Kabine erreichbar.

Dadurch, dass die Steuerventileinrichtung zwei Steuerventile aufweist, von denen ein Steuerventil an seinem Eingang mit der Ringseite und an seinem Ausgang sowohl mit der Kolbenseite als auch mit dem Eingang des zweiten Steuerventils fluidführend verbunden ist, das mit seinem Ausgang an die Kolbenseite und an den Eingang der Pumpe der Motor-Pumpen-Einheit angeschlossen ist, bildet die Steuerventileinrichtung einen Druckregler, über den der Differentialzylinder, dessen Kolbenseite in Verbindung mit dem Speicher die vom Fahrzeug aufgebrachte statische Last trägt, auf der Ringseite mit zusätzlichem Druck versorgbar ist, um die zur aktiven Federung benötigten zusätzlichen dynamischen Kräfte zu erzeugen.

Beide Steuerventile sind Proportionaldrosselventile, bevorzugt elektromagnetisch ansteuerbare 2/2-Wege-Proportionaldrosselventile. Diese lassen sich mit hoher Schaltdynamik unmittelbar von der Fahrzeugelektronik ansteuern.

Mit Vorteil kann die Anordnung ferner so getroffen sein, dass in die Verbindungsleitung zwischen dem Ausgang des zweiten Steuerventils und dem Eingang der Pumpe der hydraulische Speicher angeschlossen ist.

Mit Vorteil kann die Anordnung ferner so getroffen sein, dass in die Verbindungsleitung zwischen dem Ausgang der Pumpe und einer Abzweigstelle, die fluidführend mit der Ringseite und dem Eingang des ersten Steuerventils verbunden ist, ein Rückschlagventil geschaltet ist, das in Richtung der Ringseite öffnet. Dadurch ist der Differentialzylinder gegen einen Druckabfall bei Stillstand der Pumpe abgesichert.

Mit Vorteil kann zwischen den Teil der Verbindungsleitung, der vom Ausgang der Pumpe zum Rückschlagventil führt, und der Verbindungsleitung, die zum Druckspeicher führt, ein Druckbegrenzungsventil geschaltet sein, das in Richtung der Abzweigstelle öffnet. Dadurch ist der von der Motor-Pumpen-Einheit lieferbare Maximaldruck vorgebbar.

Bei dem erfindungsgemäßen aktiven Federungssystem werden in dem jeweiligen Differentialzylinder nicht nur dynamische Kräfte erzeugt, sondern der statische Druck im Differentialzylinder trägt auch die an ihm wirkende statische Kabinenlast. Somit ist auch die im geschlossenen Kreis angeordnete Pumpe mit Druck beaufschlagt. Bei einem üblichen Kabinengewicht im Bereich von beispielsweise 300 kg und einem Durchmesser der Kolbenstange von etwa 18 mm, wie es bei vorhandenen Kabinenfederungszylindern häufig der Fall ist, ergibt sich ein statischer Druck im System von über 100 bar. Übliche Zahnradpumpen, die sich durch hohe Betriebssicherheit und kostengünstig herstellbare Bauweise auszeichnen, sind daher für den diesbezüglichen Einsatz, da sie saugseitig nur für wesentlich niedrigere Drücke zugelassen sind, nicht geeignet. In einer vorteilhaften Ausführungsform ermöglicht es die Erfindung, trotz dieser Problematik, die Vorteile des Einsatzes einer Zahnradpumpe zu nutzen, indem bei der Motor-Pumpen-Einheit eine Zahnradpumpe eingesetzt ist, die mit ihrem Leckölanschluss an einen Rücklauf angeschlossen ist. Die Verbindung über eine Leckölleitung zum Tank führt zur Druckentlastung der Wellendichtung der Zahnradpumpe, so dass diese an beiden Anschlüssen druckfest ist und beim erfindungsgemäßen System betriebssicher einsetzbar ist.

Mit Vorteil ist hierbei mit dem Eingang der Zahnradpumpe der Ausgang einer Speisepumpe verbunden. Ein durch permanentes Abfließen von Lecköl aus dem geschlossenen Kreis zum Tank eintretendes Absinken der Kabine ist dadurch kompensierbar. Um die gewünschte Niveaulage einhalten zu können und/oder für eine gewünschte Niveaueinstellung kann der von der Speisepumpe eingespeiste Druck über ein proportionales Druckbegrenzungsventil einstellt werden, das zwischen dem Ausgang der Speisepumpe und dem Tank eingesetzt ist. Ein zusätzlicher Vorteil bei dieser Anordnung besteht darin, dass durch die Leckage und das zu deren Ausgleich permanent eingespeiste neue Öl eine kontinuierliche Spülung des geschlossenen Kreises des Systems erfolgt.

Alternativ kann die Motor-Pumpen-Einheit eine Radialkolbenpumpe aufweisen oder für diese ein Orbitalmotor eingesetzt sein, also Pumpen, deren Bauweise hohe Drücke an der Saugseite zulässt.

Nachstehend ist die Erfindung anhand von in der Zeichnung dargestellten Ausführungsbeispielen im Einzelnen erläutert.

Es zeigen:
- Fig. 1: in Symboldarstellung die Fluidschaltung eines Ausführungsbeispiels des erfindungsgemäßen Feder-Dämpfer-Systems;
- Fig. 2 bis 5: die Fluidschaltung von Fig. 1, wobei mit Linien unterschiedlicher Strichstärke vier verschiedene Hauptzustände des Systems des Ausführungsbeispiels kenntlich gemacht sind; und
- Fig. 6: in Symboldarstellung die Fluidschaltung eines zweiten Ausführungsbeispiels des erfindungsgemäßen Systems.

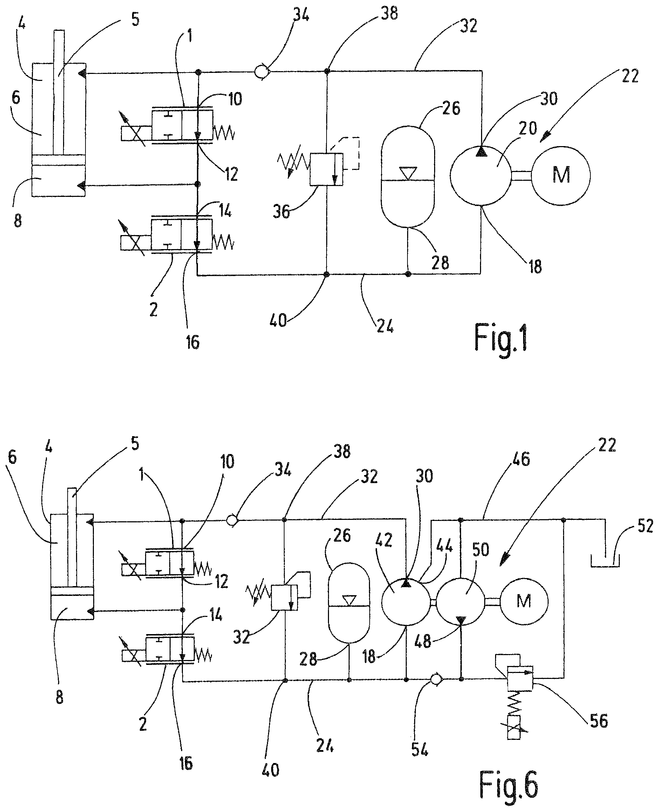

In den Figuren ist ein als Federbein, insbesondere einer Kabinenfederung, vorgesehener Differentialzylinder mit 4 bezeichnet, dessen Kolbenstange mit 5 bezeichnet ist und der auf seiner Ringseite 6 und seiner Kolbenseite 8 Arbeitsräume unterschiedlich wirksamer Kolbenfläche aufweist. Ringseite 6 und Kolbenseite 8 sind mit einer Steuerventileinrichtung in Verbindung, die zwei Steuerventile aufweist, die jeweils durch ein Proportionaldrosselventil gebildet sind. Bei den vorliegenden Ausführungsbeispielen handelt es sich um elektromagnetisch ansteuerbare 2/2-Wege-Proportionaldrosselventile, die mit 1 bzw. 2 bezeichnet sind. Von diesen ist das Proportionaldrosselventil 1 an seinem Eingang 10 mit der Ringseite 6 des Differentialzylinders 4 und an seinem Ausgang 12 sowohl mit der Kolbenseite 8 als auch mit dem Eingang 14 des zweiten Proportionaldrosselventils 2 verbunden. Letzteres ist mit seinem Ausgang 16 am Eingang 18 der Pumpe 20 der Motor-Pumpen-Einheit 22 über eine Verbindungsleitung 24 angeschlossen. Ein hydropneumatischer Druckspeicher 26 ist mit seiner Ölseite 28 ebenfalls an der Verbindungsleitung 24 angeschlossen. Mit ihrem druckseitigen Ausgang 30 ist die Pumpe 18 mit der Ringseite 6 des Differentialzylinders 4 über eine zweite Verbindungsleitung 32 verbunden, in der sich ein Rückschlagventil 34 befindet, das in Richtung zur Ringseite 6 öffnet. Vervollständigt ist die Fluidschaltung des in Fig. 1 bis 5 dargestellten ersten Ausführungsbeispiels durch ein Druckbegrenzungsventil 36, das zwischen einer Abzweigstelle 38, die sich an der zweiten Verbindungsleitung 32 zwischen dem Rückschlagventil 34 und dem Pumpenausgang 30 befindet, und einer Abzweigstelle 40 an der ersten Verbindungsleitung 24 eingefügt ist.

Bei dieser Anordnung trägt die Kolbenseite 8 des Differentialzylinders 4 in Verbindung mit dem Hydrospeicher 26 die statische Last, die bei einer üblichen 3-Punkt-Abstützung einer Kabine von 300 kg zu einem statischen Druck von über 100 bar führen kann. In Anbetracht des hohen Druckniveaus ist beim vorliegenden Beispiel als Pumpe 20 der Motor-Pumpen-Einheit 22 eine Axialkolbenpumpe vorgesehen, die hohe Drücke am saugseitigen Eingang 18 zulässt. Alternativ könnte auch ein Orbitalmotor eingesetzt sein.

Solange die Proportionaldrosselventile 1 und 2 nicht angesteuert und in ihrer nicht drosselnden Ausgangsstellung geöffnet sind, muss seitens der Motor-Pumpen-Einheit 22 kein Druck aufgebaut werden. Abgesehen von den Leitungswiderständen pumpt die Pumpe 20 das Öl ohne Druckunterschied in dem den Differentialzylinder 4 enthaltenden geschlossenen Kreis, wobei der Ringraum 6 mit dem druckseitigen Ausgang 30 der Pumpe 20 verbunden ist.

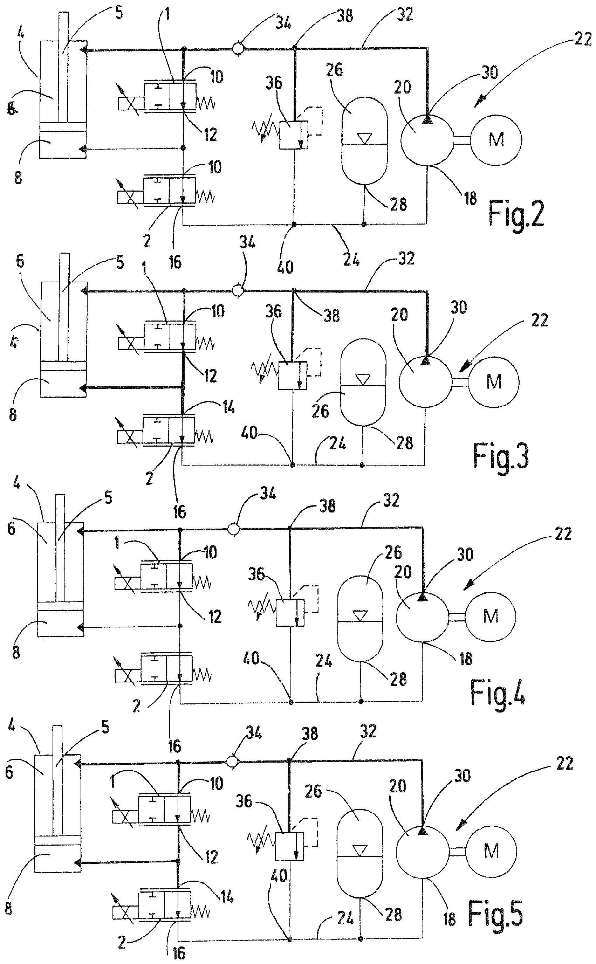

Die Kolbenseite 8 ist mit dem Ausgang 12 des ersten Proportionaldrosselventils 1 und dem Eingang 14 des zweiten Proportionaldrosselventils 2 in Verbindung. Solange die beiden Ventile 1 und 2 in Ausgangsstellung sind, herrscht in Ringseite 6 und Kolbenseite 8 der gleiche statische Druck und da diese ungedrosselt miteinander in Verbindung sind, ist die Federung ungedämpft. In den Fig. 2 bis 5 sind vier Hauptzustände des Systems, die sich bei Ansteuern der Ventile 1 und 2 ergeben, dadurch kenntlich gemacht, dass Leitungsabschnitte, die den höheren Druck führen, mit dickerer Linie gezeichnet sind.

Bei dem in Fig. 2 verdeutlichten Zustand "Aktives Einfedern" ist das erste Proportionaldrosselventil 1 aus der geöffneten Ausgangsstellung in eine Drosselstellung angesteuert. Durch den von der Pumpe 20 erzeugten Volumenstrom wird durch die Drosselwirkung des angesteuerten Ventils 1 ein im Ringraum 6 des Differentialzylinders 4 wirkender Druck angestaut, der eine aktive Einfederbewegung der Kolbenstange 5 bewirkt.

Die Fig. 3 bezieht sich auf den Zustand "Aktives Ausfedern". Bei diesem Zustand ist das zweite Proportionaldrosselventil 2 angesteuert. Durch dessen Drosselwirkung wird sowohl im Ringraum 6 als auch im Kolbenraum 8 ein Druck angestaut. Wegen der größeren Kolbenfläche des Kolbenraums 8 bewirkt der erhöhte Druck im Zylinder 4 eine aktive Ausfederbewegung der Kolbenstange 5.

Die Fig. 4 bezieht sich auf den Zustand "Dämpfen während Ausfedern". Die Kolbenstange 5 des Zylinders 4 befindet sich in diesem Zustand in einer Ausfederbewegung. Über das nicht angesteuerte, offene Proportionaldrosselventil 1 wird somit Öl aus dem Ringraum 6 in den Kolbenraum 8 verschoben. Wird jetzt das Proportionaldrosselventil 1 angesteuert, wird dieser Volumenstrom angestaut und erzeugt einen Druckunterschied zwischen Ringseite 6 und Kolbenseite 8 des Zylinders 4. Dieser Druckunterschied wirkt bei der Ausfederbewegung dämpfend.

Die Fig. 5 bezieht sich auf den Zustand "Dämpfen während Einfedern". Die Kolbenstange 5 des Zylinders 4 befindet sich hierbei in einer Einfederbewegung. Das Öl fließt zum einen Teil über das nicht angesteuerte, offene Proportionaldrosselventil 1 von der Kolbenseite 8 zur Ringseite 6. Der andere Teil fließt über das zweite Proportionaldrosselventil 2 in den Speicher 26. Wird nun das zweite Proportionaldrosselventil 2 angesteuert, wird durch den zum Speicher 26 fließenden Volumenstrom ein Druckunterschied angestaut und wirkt der Einfederbewegung dämpfend entgegen.

Die Fig. 6 zeigt ein zweites Ausführungsbeispiel, bei dem der geschlossene Kreis mit Differentialzylinder 4, den Steuerventilen 1 und 2, dem Speicher 26 und der Pumpe der Motor-Pumpen-Einheit 22 dem ersten Ausführungsbeispiel entspricht. Der Unterschied besteht demgegenüber darin, dass anstelle der Axialkolbenpumpe 20 eine Zahnradpumpe 42 mit Leckölanschluss 44 eingesetzt ist und der Leckölanschluss 44 über einen Rücklauf 46 mit einem Tank 52 verbunden und somit drucklos ist. Durch die dadurch gebildete Druckentlastung der Wellendichtung der Zahnradpumpe 42 ist diese an ihren beiden Anschlüssen druckfest und dadurch trotz des hohen, im geschlossenen Kreis herrschenden Druckniveaus sicher betreibbar. Jedoch führt der Leckölstrom, der bis zu 1 % des Nennvolumenstroms betragen kann, durch das permanente Abfließen aus dem geschlossenen Kreis zum Tank 52 hin zu einem kontinuierlichen Absinken der Kolbenstange 5. Um die gewünschte Niveaulage trotzdem einhalten zu können, ist eine Speisepumpe 50 in Form einer kleinen Zahnradpumpe vorgesehen, die aus dem Tank 52 ansaugt und an ihrem druckseitigen Ausgang 48, der über ein Rückschlagventil 54 mit der Verbindungsleitung 24 in Verbindung ist, einen Speisedruck erzeugt. Mittels eines proportionalen Druckbegrenzungsventils 56, das zwischen den Ausgang 48 der Speisepumpe 50 und dem Tank 52 geschaltet ist, lassen sich Speisedruck und damit Niveaulage einstellen. Ein zusätzlicher Vorteil der Ausführungsform von Fig. 6 besteht darin, dass durch die Leckage und das zu deren Ausgleich permanent neu eingespeiste Öl eine kontinuierliche Spülung des geschlossenen Kreises des Systems erfolgt.

## Patentansprüche

1. Feder-Dämpfer-System zur gesteuerten Energiezufuhr zu einer Ring-(6) und/oder einer Kolbenseite (8) eines Differentialzylinders (4), bestehend aus mindestens
- dem Differentialzylinder (4),
- einem hydraulischen Speicher (26) und
- einer Steuerventileinrichtung (1, 2),
wobei mittels mindestens einer Motor-Pumpen-Einheit (22) in einem geschlossenen Kreis unter Einsatz der Steuerventileinrichtung (1, 2) die Ringseite (6) oder sowohl die Ring-(6) als auch die Kolbenseite (8) des Differentialzylinders (4) mit Druckfluid versorgbar sind,
**dadurch gekennzeichnet, dass** die Steuerventileinrichtung zwei Steuerventile (1, 2) aufweist, von denen ein Steuerventil (1) an seinem Eingang (10) mit der Ringseite (6) und an seinem Ausgang (12) sowohl mit der Kolbenseite (8) als auch mit dem Eingang (14) des zweiten Steuerventils (2) fluidführend verbunden ist, das mit seinem Ausgang (16) an den Eingang (18) der Pumpe (20) der Motor-Pumpen-Einheit (22) angeschlossen ist, und dass die beiden Steuerventile (1, 2) Proportionaldrosselventile sind, die in ihrer nicht drosselnden Ausgangsstellung geöffnet sind.

2. System nach Anspruch 1, **dadurch gekennzeichnet, dass** die beiden Proportionaldrosselventile elektromagnetisch ansteuerbare 2/2-Wege-Proportionaldrosselventile sind.

3. System nach Anspruch 1 oder 2, **dadurch gekennzeichnet, dass** in die Verbindungsleitung (24) zwischen dem Ausgang (16) des zweiten Steuerventils (2) und dem Eingang (18) der Pumpe (20) der hydraulische Speicher (26) angeschlossen ist.

4. System nach einem der vorstehenden Ansprüche, **dadurch gekennzeichnet, dass** in die Verbindungsleitung (32) zwischen dem Ausgang (30) der Pumpe (20) und einer Abzweigstelle (38), die fluidführend mit der Ringseite (6) und dem Eingang (10) des ersten Steuerventils (1) verbunden ist, ein Rückschlagventil (34) geschaltet ist, das in Richtung der Ringseite (6) öffnet.

5. System nach Anspruch 4, **dadurch gekennzeichnet, dass** zwischen dem Teil der Verbindungsleitung (32) der vom Ausgang (30) der Pumpe (20) zum Rückschlagventil (34) führt, und der Verbindungsleitung (24), die zum Druckspeicher (26) führt, ein Druckbegrenzungsventil (36) geschaltet ist.

6. System nach einem der vorstehenden Ansprüche, **dadurch gekennzeichnet, dass** die Motor-Pumpen-Einheit (22) eine Zahnradpumpe (42) aufweist, die mit ihrem Leckölanschluss (44) an einen Rücklauf (46) angeschlossen ist.

7. System nach Anspruch 6, **dadurch gekennzeichnet, dass** mit dem Eingang (18) der Zahnradpumpe (42) der Ausgang (48) einer Speisepumpe (50) verbunden ist.

8. System nach einem der Ansprüche 1 bis 5, **dadurch gekennzeichnet, dass** die Motor-Pumpen-Einheit (22) eine Radialkolbenpumpe (20) aufweist oder für diese ein Orbitalmotor eingesetzt ist.

## Claims

1. Spring-damper system for controlled power supply to an annulus side (6) and/or a piston side (8) of a differential cylinder (4), consisting of at least
- the differential cylinder (4),
- a hydraulic accumulator (26) and
- a control valve apparatus (1, 2),
wherein the annulus side (6) or both the annulus side (6) and the piston side (8) of the differential cylinder (4) can be supplied with pressurised fluid by means of at least one motor pump unit (22) in a closed circuit using the control valve apparatus (1, 2),
**characterised in that** the control valve apparatus comprises two control valves (1, 2), one (1) of which is connected in a fluid-conveying manner at its inlet (10) to the annulus side (6) and at its outlet (12) to both the piston side (8) and to the inlet (14) of the second control valve (2), which is connected with its outlet (16) to the inlet (18) of the pump (20) in the motor pump unit (22), and **in that** both control valves (1, 2) are proportional throttle valves which are opened in their non-throttling original position.

2. System according to claim 1, **characterised in that** both proportional throttle valves are 2/2-way proportional throttle valves that can be actuated by electromagnetic means.

3. System according to either claim 1 or claim 2, **characterised in that** the hydraulic accumulator (26) is connected in the connecting line (24) between the outlet (16) of the second control valve (2) and the inlet (18) of the pump (20).

4. System according to any of the preceding claims, **characterised in that** a non-return valve (34) is connected in the connecting line (32) between the outlet (30) of the pump (20) and a branch point (38), which is connected in a fluid-conveying manner to the annulus side (6) and the inlet (10) of the first control valve (1), said non-return valve (34) opening in the direction of the annulus side (6).

5. System according to claim 4, **characterised in that** a pressure limiting valve (36) is connected between the part of the connecting line (32) that leads from the outlet (30) of the pump (20) to the non-return valve (34) and the connecting line (24) that leads to the pressure accumulator (26).

6. System according to any of the preceding claims, **characterised in that** the motor pump unit (22) comprises a gear pump (42) which is connected, with its leakage oil port (44), to a return (46).

7. System according to claim 6, **characterised in that** the outlet (48) of a feed pump (50) is connected to the inlet (18) of the gear pump (42).

8. System according to any of claims 1 to 5, **characterised in that** the motor pump unit (22) comprises a radial piston pump (20) or an orbital motor is used for said unit.

## Revendications

1. Système à ressort - amortisseur d'apport d'énergie commandée à un côté (6) annulaire et/ou à un côté (8) de piston d'un cylindre (4) différentiel, constitué d'au moins
- le cylindre (4) différentiel,
- un accumulateur (26) hydraulique et
- un dispositif (1, 2) à vanne de commande,
dans lequel, au moyen d'au moins un groupe (22) motopompe, on peut alimenter en fluide sous pression dans un circuit fermé, en utilisant le dispositif (1, 2) de vanne de commande, le côté (6) annulaire ou tant le côté (6) annulaire qu'également le côté (8) de piston du cylindre (4) différentiel,
**caractérisé en ce que** le dispositif de vanne de commande à deux vannes (1, 2) de commande, dont une vanne (1) de commande communique fluidiquement, à son entrée (10), avec le côté (6) annulaire et, à sa sortie (12), tant avec le côté (8) de piston qu'également avec l'entrée (14) de la deuxième vanne (2) de commande, qui, par sa sortie (16) est raccordée à l'entrée (18) de la pompe (20) du groupe (22) motopompe et **en ce que** les deux vannes (1, 2) de commande sont des vannes d'étranglement proportionnelles, qui sont ouvertes dans leur position initiale non étranglée.

2. Système suivant la revendication 1, **caractérisé en ce que** les deux vannes d'étranglement proportionnelles sont des vannes d'étranglement proportionnelles à 2/2 voies, pouvant être commandées électromagnétiquement.

3. Système suivant la revendication 1 ou 2, **caractérisé en ce que** l'accumulateur (26) hydraulique est raccordé dans la ligne (24) de liaison entre la sortie (16) de la deuxième vanne (2) de commande et l'entrée (18) de la pompe (20).

4. Système suivant l'une des revendications précédentes, **caractérisé en ce que**, dans la ligne (32) de liaison entre la sortie (30) de la pompe (20) et un point (38) de dérivation, qui communique fluidiquement avec le côté (6) annulaire et avec l'entrée (10) de la première vanne (1) de commande, est monté un clapet (34) antiretour, qui s'ouvre dans la direction du côté (6) annulaire.

5. Système suivant la revendication 4, **caractérisé en ce qu'**entre la partie de la ligne (32) de liaison, qui va de la sortie (30) de la pompe (20) au clapet (34) antiretour, et la ligne (24) de liaison, qui va à l'accumulateur (26) de pression, est montée une vanne (36) de limitation de la pression.

6. Système suivant l'une des revendications précédentes, **caractérisé en ce que** le groupe (22) motopompe comporte une pompe (42) à engrenage, qui est raccordée, par son raccord (44) d'huile de fuite, à un retour (46).

7. Système suivant la revendication 6, **caractérisé en ce que** la sortie (48) d'une pompe (50) d'alimentation est reliée à l'entrée (18) de la pompe (42) à engrenage.

8. Système suivant l'une des revendications 1 à 5, **caractérisé en ce que** le groupe (22) motopompe a une pompe (20) à pistons radiaux ou un moteur orbital est utilisé pour celle-ci.
